# EUROPEAN PATENT SPECIFICATION

(11) **EP 2 076 997 B1**
(45) Date of publication and mention of the grant of the patent: **13.04.2011**
(21) Application number: 07821209.9
(22) Date of filing: 11.10.2007
(51) Int. Cl.: H04W 4/06, H04L 12/18

(54) **Method for multimedia broadcast/multicast service, MBMS**
Verfahren für einen Multimedia-Broadcast/Multicast-Dienst, MBMS
Procédé pour un service de diffusion/multidiffusion multimedia, MBMS

(30) Priority: 13.10.2006 CN 200610136171
(43) Date of publication of application: 08.07.2009
(73) Proprietor: Nokia Siemens Networks GmbH & Co. KG, 81541 München (DE)
(72) Inventor: HE, Jing, Beijing 100102 (CN); LIU, Ying, Beijing 100102 (CN)
(74) Representative: Bruglachner, Thomas E.
(86) International application number: PCT/EP2007/060842
(87) International publication number: WO 2008/043818

(56) References cited:
- WO-A-2004/112314
- US-A1- 2005 026 607

## Description

### 1. Technical area

This invention involves a type of signal transmission protocol for mobile communications, specifically a method of point to multipoint communication which could for example be used in third generation mobile communications protocols.

### 2. Technical background

Multimedia broadcast groupcast methods (MBMS) are a type of point to multipoint service method proposed by 3GPP. Using this method, the service provider sends the same data from a single source point to multiple receivers, thereby effectively economizing on the use of network resources. Data may be transmitted within the network via the broadcast method, or it may be transmitted using a point-to-multipoint multicast method.

If the user wishes to use point-to-multipoint services, the user must apply to the service provider to activate a service account in order to be listed within the service provider's designated service table. In order to ensure that the user immediately understands the information to be broadcast, the service provider can use the broadcast method to send a broadcast program table to all users, or to certain specified uses (for example those users who have requested access to a certain program). After receiving the broadcast program table, the user sends a join message to the service provider, and the service provider then verifies whether the user is authorized to receive the relevant content.

An example of a verification method which can be used is where a Broadcast Multicast Service Center (BM-SC) carries out verification of the user's eligibility, i.e. it verifies whether the user in question is authorized to receive the specified level of programming, whether the user's account has sufficient funds to pay for the required service, and so on. Once the user passes this verification, the user may receive the type of information service at the designated time via the designated method.

One problem with existing technology is that if the user fails to pass the verification, the user receives no notification of exactly why he or she is not authorized to use that service. This is because, using existing technologies, the service provider does not send a notification to the user to inform him/her whether or not he/she has passed the verification.

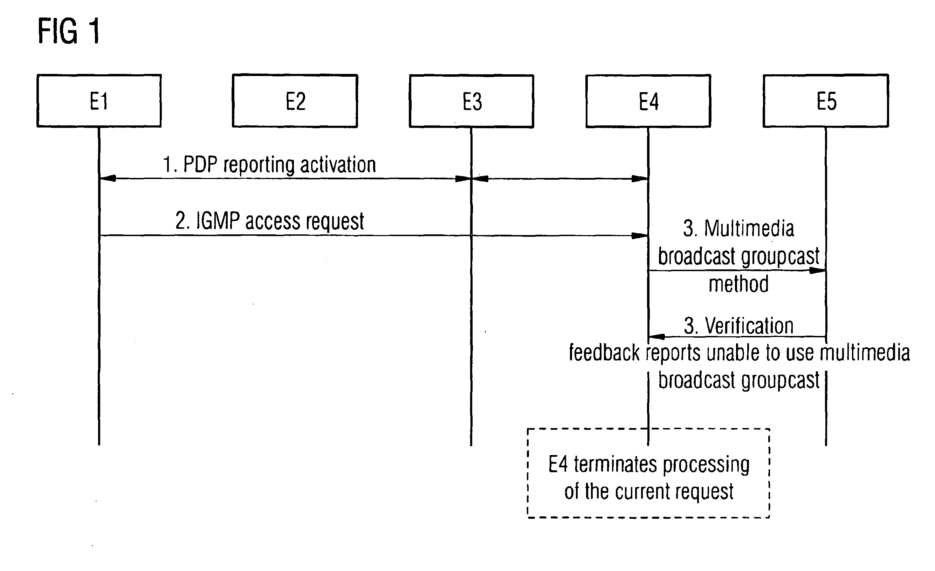

Figure 1 shows the standard activation process for multimedia broadcast groupcast method groupcast services using existing technologies. Label E1 shows a mobile piece of user equipment (UE), E2 shows the wireless access equipment (GERAN/UTRAN), E3 shows a Serving GPRS Support Node (SGSN), E4 shows a Gateway GPRS Support Node (GGSN), and E5 shows a Broadcast Multicast Service Center (BM-SC). The verticals in the diagram proceed downwards, showing the time direction of the working process of various devices. The numbers in the process refer to the process content of the particular step.

When user equipment E1 activates the multimedia broadcast groupcast method groupcast service, the first step is that user equipment E1 sends a Packet Data Protocol (PDP) report request to SGSN E3 via wireless access equipment E2, requesting the establishment of contact with GGSN E4. Wireless access equipment E3 then sends this request to GGSN E4. GGSN E4 then gives a response to the request.

In step 2, user equipment E1 sends a request to access a specific groupcast service to GGSN E4 in the format specified by the Internet Group Management Protocol (IGMP).

Next, in step 3, GGSN E4 sends this request to BM-SC E5, and BM-SC E5 verifies the user's eligibility for the multimedia broadcast groupcast method (MBMS). The verification data may, for example, specify whether the user equipment has already registered with BM-SC E5, whether there are sufficient funds in the user equipment's registered account to pay for the service, and so on. Next, BM-SC E5 sends a MBMS verification response signal to GGSN E4, informing GGSN E4 of the results of verification. The system thus completes verification of user equipment E1 with regard to eligibility for this multipoint service. The result is that, if user equipment E1 passes the verification, GGSN E4 will send the relevant service signals to user equipment E1 at the designated time; if not, then GGSN E4 will not provide this service to user equipment E1 at the designated time. The problem is that prior to the start of the service, the user does not know whether the system has already accepted the service request; if he/she needs to confirm the verification results for this service, he/she must actively make enquiries to the network through other methods (such as making an independent enquiry to BM-SC E5 through a manual route). There is no doubt that users remain dissatisfied with this level of quality of service.

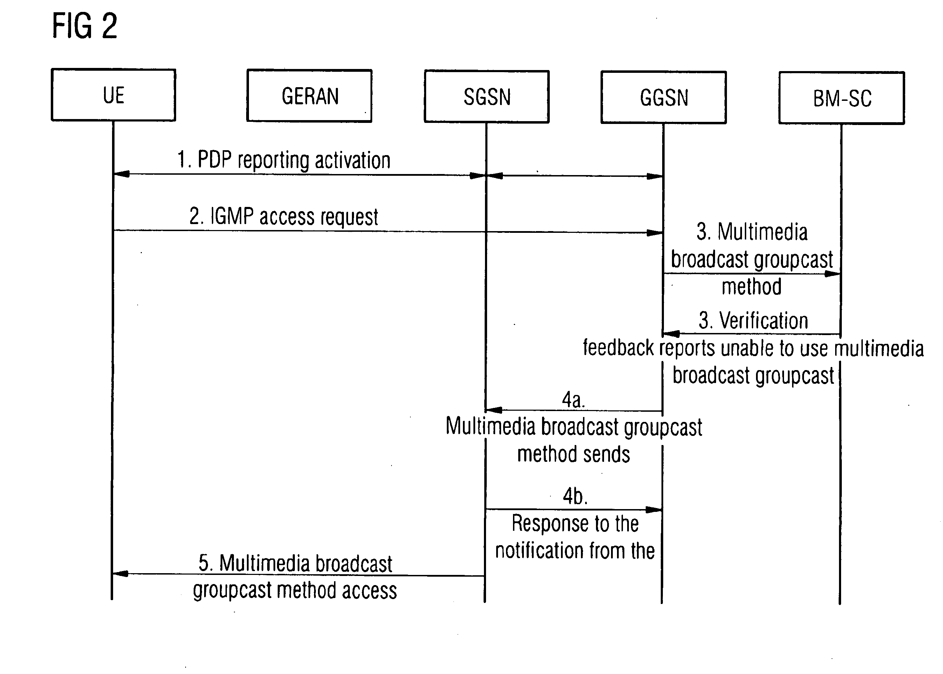

For this reason, the type of improved existing solution shown in Figure 2 is as follows: Three further steps are added after Step 3 of the groupcast service eligibility verification process described above, namely steps 4a, 4b and 5.

Specifically, in Step 4a, GGSN E4 sends an MBMS notification request signal to SGSN E3 indicating that verification has failed, SGSN E3 sends a reply signal indicating that the information was received to GGSN E4, and simultaneously sends an information signal to user equipment E1 via wireless access equipment E2 indicating that E1's access request was denied. The problem with this method is that it necessitates changes to the signal standards used to carry out communication between the network equipment, for example requiring a new type of signal to be sent from SSGN E3 to user equipment E1. For service providers, network equipment manufacturers and terminal equipment manufacturers, the requirement to make such major changes to network and terminal equipment simply to allow a simple notification to be sent to user equipment E1 is not economically viable.

Consequently, the various methods used in existing technologies all fail to properly solve the problems of actively notifying the user that a request is denied and informing the user of the reason for the denial. Resolving this issue is therefore the starting point for the method in this invention.

The WO 2004/112314 A describes systems and methods in which an origination station broadcasts a broadcast program to at least one of a plurality of destination stations. A first destination station (or a first group of destination stations) receives a first registration period parameter from the origination station. The first registration period parameter specifies a first period during which the first destination station must register with the origination station. The first destination station may block any attempted registration request that occurs outside the first period. Alternatively, the origination station can deny any attempted registration request by the first destination station that occurs outside the first period. If the registration request from the first destination station is sent before the first period begins, then the destination station can periodically request registration until a request is sent within the first period.

The US 2005/026607 A1 describes a method for ciphering MBMS 20 (Multimedia Broadcast/Multicast Service) data in a wired/wireless communication system. The MBMS service enables the same service or desired services to be provided to a number of users. In the ciphering method, a ciphering key for encoding MBMS data is previously provided to an 25 authorized UE, and the authorized UE is informed of when MBMS data encoded using the ciphering key is to be transmitted, thereby preventing unauthorized UEs from illegally receiving the MBMS service.

### 3. Invention content

Due to the above factors, this invention proposes a new multimedia broadcast groupcast method, which is used to implement notification of the user that a request is denied and inform the user of the reason the request is denied.

In accordance with one aspect of the invention, the invention provides a type of multimedia broadcast groupcast method used to implement multicast services for user equipment, including: 1) User equipment (E1) establishes a logical connection with a network node.
2) User equipment (E1) issues a request to access a certain groupcast service.
3) Broadcast Multicast Service Center (E5) carries out multimedia broadcast groupcast method eligibility verification of user equipment (E1), characterized by the further inclusion of the following steps:
4) Broadcast Multicast Service Center (E5) gives verification information, including verification results, to user equipment (E1), using a multimedia broadcast groupcast service announcement method.

The multimedia broadcast groupcast method in this invention may be generally used in WCDMA, TD-SCDMA, GSM, CDMA2000 and other types of mobile communication networks. There are minor differences between the specific methods (and the names of relevant equipment) used in each of the mobile communications standards mentioned above to enable the user equipment to establish a logical connection with network nodes, the user equipment to send a request to access a certain groupcast service to the BM-SC, and the BM-SC to carry out eligibility verification of the user equipment, and technical personnel working in the field will be familiar with these differences.

In accordance with a more specific aspect of this invention, the invention proposes a type of multimedia broadcast groupcast method, which is used to implement multicast services for user equipment, including:
1) The user equipment sends a packet data protocol (PDP) report request to the Serving GPRS Support Node (SGSN), requesting the establishment of contact with the Gateway GPRS Support Node (GGSN); the SGSN then sends this request to the GGSN; the GGSN then sends information responding to the request to the user equipment.
2) The user equipment sends a request to access a certain groupcast service to the GGSN.
3) The GGSN transmits the request to access a certain multipoint service to the Broadcast Multicast Service Center (BM-SC), and the BM-SC verifies eligibility for the multimedia broadcast groupcast method (MBMS), and sends a multimedia broadcast groupcast method user verification response signal to the GGSN, informing the GGSN of the verification results; this also includes:
4) The BM-SC gives the user equipment the verification information, including the verification results, using an MBMS service announcement method.

The MBMS method of this aspect of the invention may be generally used over WCDMA, TD-SCDMA, GSM and other types of mobile communication systems.

An MBMS service announcement means that the MBMS method service provider gives the user equipment information relating to the services provided (such as the services program list for the program provided), and does not refer to the service information itself.

In accordance with a further aspect of the method of the invention described above, the methods which the BM-SC uses to notify the user equipment may be MBMS bearer capability, PUSH technology, SMS, SMS-CB or URL technology.

Specifically, when BM-SC E5 uses MBMS bearer capability technology to notify the user equipment, it may separate user equipment of the same type into groups, and notify user equipment from the different groups separately.

The URL technology mentioned may for example be WAP or HTTP technologies.

Furthermore, the BM-SC may select one method or a combination of multiple methods to notify the user equipment, based on the requirements of the operator.

In the method in this invention, the verification information includes but is not limited to: verification success, verification failure, reason for failed verification, and suggestions on how the user equipment can pass verification (for example by altering registration, increasing the balance on the account, upgrading the user equipment and so on).

There are substantial differences between the method in this invention and the MBMS method in existing technologies shown in Figure 2. In the MBMS method shown in Figure 2, during the process of establishing notification contact with user equipment E1, BM-SC E5 uses a signal method to inform the user equipment of the result that the MBMS method multipoint service requested by user equipment E1 was denied. In the MBMS method in this invention, once the BM-SC has established communications contact with the user equipment, a service announcement function (MBMS method service announcement function) is used to notify user equipment E1 that the MBMS method multipoint service was denied, and may also include the reason that the service was denied.

Using the method in this invention, it is possible to inform the user immediately if it is not currently possible to receive a certain service, and to inform the user of the reason for this; this not only encourages the user to take further action to remove the obstacles and obtain authorization to receive the service, but also increases user satisfaction.

### 4. Diagram explanations

Figure 1 is a schematic diagram of the activation process for MBMS method multipoint services using existing technical standards.
Figure 2 is a schematic diagram of a technical solution which improves upon the solution using existing technologies shown in Figure 1.
Figure 3 is a schematic diagram of the MBMS method in this invention.
Figure 4 is a schematic diagram of the logical structure of the BM-SC.

### 5. Practical implementations

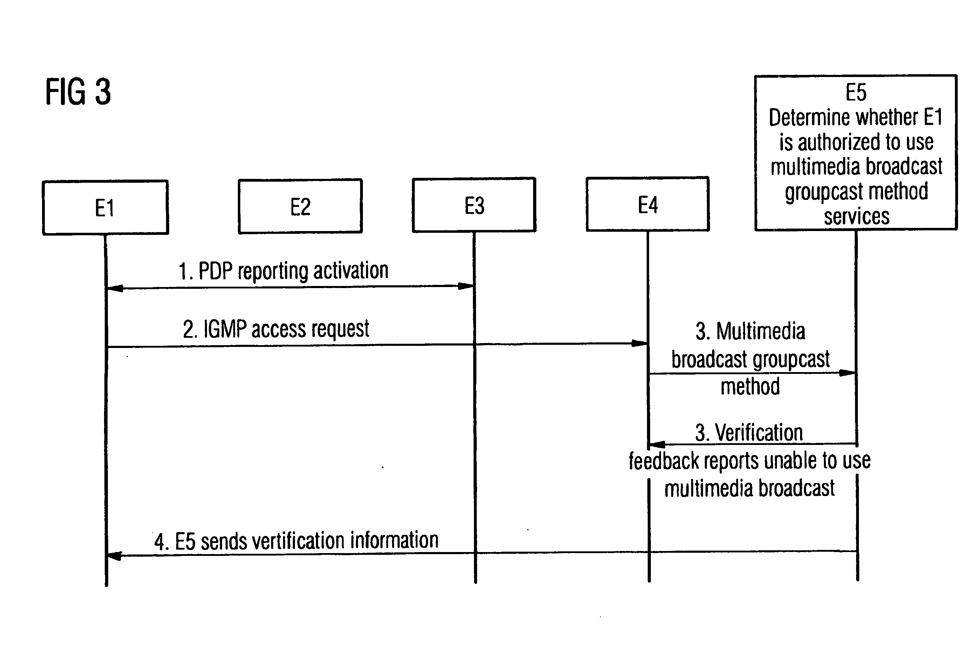

As shown in Figure 3, this invention provides a new type of MBMS method. Building on the foundations of existing MBMS methods, a fourth step is added, i.e. a step is added in which BM-SC E5 gives user equipment E1 verification information via an MBMS service announcement method.

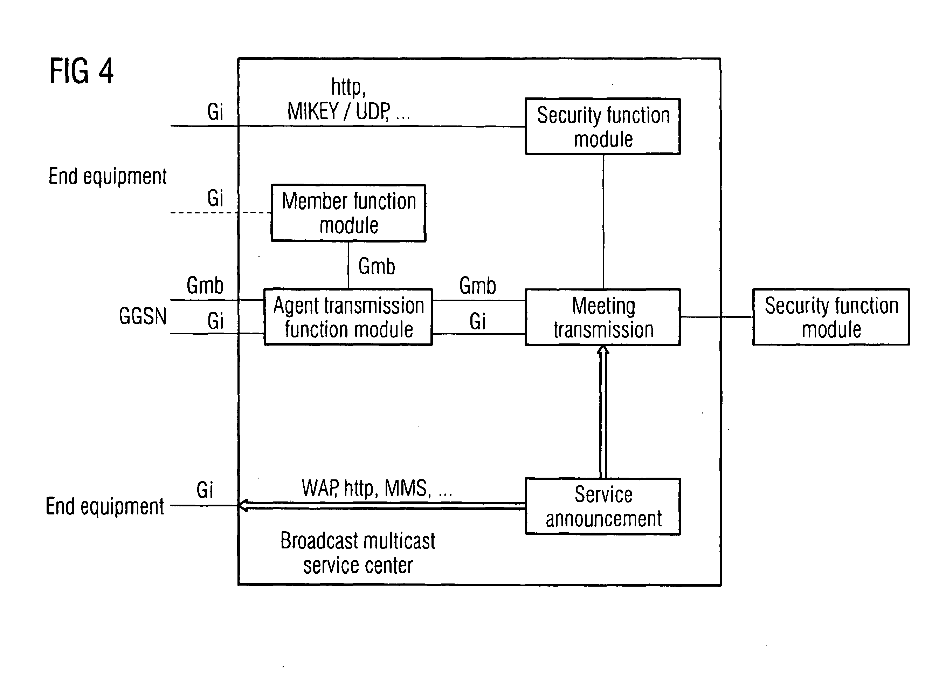

Figure 4 shows the logical structure of the BM-SC used in this invention. The main point shown relating to the invention is the service announcement function module.

A type of MBMS service announcement method may be used to notify the user equipment, e.g. methods such as MBMS bearer capability technology, PUSH technology, SMS and small area SMS broadcast may be used to give the verification information to the user equipment.

In accordance with the methods in this invention, the BM-SC may use conventional MBMS bearer capability technology to notify the user equipment.

In accordance with the methods in this invention, when the BM-SC notifies the user equipment using MBMS bearer capability technology, it may continue by grouping user equipment of the same type into groups, and notifying user equipment from the different groups separately. For example, all user equipment which accesses multipoint services within a certain period of time (for example 15 minutes) may be accounted and grouped as follows:
Group 1: User equipment which has passed verification.
Group 2: User equipment which has not performed registration with BM-SC E5, and has therefore not passed verification.
Group 3: User equipment which does not have sufficient functionality to receive the service (e.g. the BM-SC sends a functionality enquiry signal to the user equipment, the user equipment replies, does not reply, or the content of the reply does not meet user equipment requirements, and is regarded as user equipment failing to meet functionality requirements), and therefore has not passed verification.
Group 4: User equipment for which the registration information does not comply with the service requirements (e.g. the age of the owner of the user equipment renders it unable to view special programs of this grade).
Group 5: User equipment which is in arrears or has an insufficient account balance to pay for the service, and has not applied for credit services.

Next, BM-SC E5 sends reply data to all user equipment in each group, notifying the users whether they have passed verification, and the reason for not passing verification where applicable. In addition, users in the second group may be reminded about registration, users in the third group may be reminded about upgrading (or changing) their user equipment, and users in the fifth group may be reminded to top up their account immediately.

Each time a user's authorization is denied as a result of the user, the BM-SC uses a PUSH point-to-point method to inform the user, for example using a WAP PUSH mechanism to send a certain link via SMS to mobile phones which support WAP PUSH functionality. This means that the user only needs to read the SMS and open the link within it in order to obtain feedback information for verification.

When the BM-SC uses a URL method, the user may check the relevant feedback information on a certain website after the access request period has passed.

When users are comparatively widely distributed within a region, the BM-SC uses an SMS method to notify user equipment in a more cost-efficient manner. Said SMS messages may include MMS messages.

When the distribution of a designated cluster of users is comparatively concentrated, an SMS small area broadcast method is used to notify user equipment in a cost-effective and convenient manner. For example, a specified language may be used for ethnic minority users or foreign users living within a specific region, and the SMS small area broadcast method may be used to send notifications to specific users applying for the service.

In certain specific situations, the BM-SC may also use a combination of methods to notify user equipment, including choosing one or multiple methods of notification for a user, and choosing one or multiple methods of notification for different user situations. For example, these notification methods may be a combination of URL and PUSH methods, in which the BM-SC "pushes" a certain website link to the user equipment, and the user equipment may visit the URL to obtain the relevant, feedback information.

## Claims

1. A type of multimedia broadcast groupcast method used to implement multicast services for user equipment, comprising the following steps:
1) User equipment (E1) establishes logical connection with a network node.
2) User equipment (E1) issues a request to a Broadcast Multicast Service Center (E5) to access a certain groupcast service.
3) The Broadcast Multicast Service Center (E5) carries out multimedia broadcast groupcast method eligibility verification of the user equipment (E1), **characterized by** the further inclusion of the following step:
4) The Broadcast Multicast Service Center (E5) gives verification information, including verification results, to the user equipment (E1), using a multimedia broadcast groupcast service announcement method.

2. The multimedia broadcast groupcast method as claimed in claim 1 **characterized in that** the Broadcast Multicast Service Center (E5) uses multimedia broadcast multicast bearer capability technology to give the verification information to the user equipment (E1).

3. The multimedia broadcast groupcast method as claimed in claim 2 **characterized in that** the Broadcast Multicast Service Center (E5) separates user equipment (E1) of the same type into groups, and reports to user equipment in the different groups separately.

4. The multimedia broadcast groupcast method as claimed in claim 1 **characterized in that** the Broadcast Multicast Service Center (E5) uses one method from a group including push technology, SMS, SMS small area broadcast and URL, to report the verification information to the user equipment (E1).

5. The multimedia broadcast groupcast method as claimed in any of claims 1 to 4 **characterized in that** the Broadcast Multicast Service Center (E5) uses a combination of at least two methods to notify the user equipment (E1), based on the requirements of the operator.

6. The multimedia broadcast groupcast method as claimed in any of claims 1 to 4 **characterized in that** said verification information includes: verification success, verification failure, reason for verification failure, and suggestions on how the user equipment (E1) can pass verification.

7. The multimedia broadcast groupcast method as claimed in claim 5 **characterized in that** said verification information includes: verification success, verification failure, reason for verification failure, and suggestions on how the user equipment (E1) can pass verification.

8. The multimedia broadcast groupcast method as claimed in claim 1, **characterized in that**:
Step 1) comprises that the user equipment (E1) sends a packet data protocol report request to a Serving GPRS Support Node (E3), requesting the establishment of contact with a Gateway GPRS Support Node (E4); the Serving GPRS Support Node (E3) then sends this request to the Gateway GPRS Support Node (E4); the Gateway GPRS Support Node (E4) then sends information responding to the request to the user equipment (E1).
Step 2) comprises that the user equipment (E1) sends the request to access the certain groupcast service to the Gateway GPRS Support Node (E4) and that the Gateway GPRS Support Node (E4) transmits the request to access a certain multipoint service to the Broadcast Multicast Service Center (E5),
Step 3) comprises that the Broadcast Multicast Service Center (E5) verifies its eligibility for the multimedia broadcast groupcast method, and sends a multimedia broadcast groupcast method user verification response signal to the Gateway GPRS Support Node (E4), informing the Gateway GPRS Support Node (E4) of the verification results.
Step 4) comprises that the Broadcast Multicast Service Center (E5) gives user equipment (E1) the verification information, including the verification results, using the multimedia broadcast groupcast service announcement method.

9. The multimedia broadcast groupcast method as claimed in claim 8 **characterized in that** the Broadcast Multicast Service Center (E5) gives the verification information to the user equipment (E1) using multimedia broadcast multicast bearer capability technology.

10. The multimedia broadcast groupcast method as claimed in claim 9 **characterized in that** the Broadcast Multicast Service Center (E5) divides user equipment (E1) of the same type into groups, and notifies users in each group separately.

11. The multimedia broadcast groupcast method as claimed in claim 8 **characterized in that** the Broadcast Multicast Service Center (E5) uses one method from a group including push technology, SMS, SMS small area broadcast and URL, to give the verification information to the user equipment (E1).

12. The multimedia broadcast groupcast method as claimed in any of claims 8 to 11 **characterized in that** the Broadcast Multicast Service Center (E5) uses a combination of at least two methods to notify the user equipment (E1), based on the requirements of the operator.

13. The multimedia broadcast groupcast method as claimed in any of claims 8 to 11 **characterized in that** said verification information includes: verification success, verification failure, reason for failed verification, and suggestions on how the user equipment (E1) can pass verification.

14. The multimedia broadcast groupcast method as claimed in claim 12 **characterized in that** said verification information includes: verification success, verification failure, reason for failed verification, and suggestions on how the user equipment (E1) can pass verification.

## Patentansprüche

1. Eine Art von zum Implementieren von Multicast-Diensten für Benutzergeräte verwendetem Multimedia-Broadcast-Groupcast-Verfahren, das die folgenden Schritte umfasst:
1) Ein Benutzergerät (E1) stellt eine logische Verbindung mit einem Netzknoten her.
2) Das Benutzergerät (E1) gibt eine Anforderung an ein Broadcast-Multicast Service Center (E5) aus, um auf einen bestimmten Groupcast-Dienst zuzugreifen.
3) Das Broadcast Multicast Service Center (E5) führt Multimedia-Broadcast-Groupcast-Verfahrensberechtigtheitsverifikation des Benutzergeräts (E1) aus, **gekennzeichnet durch** den weiteren Einschluss des folgenden Schritts:
4) Das Broadcast Multicast Service Center (E5) gibt dem Benutzergerät (E1) unter Verwendung eines Multimedia-Broadcast-Groupcast-Dienstansageverfahrens Verifikationsinformationen, die Verifikationsergebnisse umfassen.

2. Multimedia-Broadcast-Groupcast-Verfahren nach Anspruch 1, **dadurch gekennzeichnet, dass** das Broadcast Multicast Service Center (E5) Multimedia-Broadcast-Multicast-Trägerfähigkeitstechnologie verwendet, um dem Benutzergerät (E1) die Verifikationsinformationen zu geben.

3. Multimedia-Broadcast-Groupcast-Verfahren nach Anspruch 2, **dadurch gekennzeichnet, dass** das Broadcast Multicast Service Center (E5) Benutzergerät (E1) desselben Typs in Gruppen auftrennt und in den verschiedenen Gruppen separat dem Benutzergerät meldet.

4. Multimedia-Broadcast-Groupcast-Verfahren nach Anspruch 1, **dadurch gekennzeichnet, dass** das Broadcast Multicast Service Center (E5) ein Verfahren aus einer Gruppe umfassend Push-Technologie, SMS, SMS Small Area Broadcast und URL verwendet, um dem Benutzergerät (E1) die Verifikationsinformationen zu melden.

5. Multimedia-Broadcast-Groupcast-Verfahren nach einem der Ansprüche 1 bis 4, **dadurch gekennzeichnet, dass** das Broadcast Multicast Service Center (E5) auf der Basis der Anforderungen des Betreibers eine Kombination von mindestens zwei Verfahren verwendet, um das Benutzergerät (E1) zu benachrichtigen.

6. Multimedia-Broadcast-Groupcast-Verfahren nach einem der Ansprüche 1 bis 4, **dadurch gekennzeichnet, dass** die Verifikationsinformationen Folgendes umfassen: Verifikationserfolg, Verifikationsmisserfolg, Grund für Verifikationsmisserfolg und Vorschläge, wie das Benutzergerät (E1) Verifikation bestehen kann.

7. Multimedia-Broadcast-Groupcast-Verfahren nach Anspruch 5, **dadurch gekennzeichnet, dass** die Verifikationsinformationen Folgendes umfassen: Verifikationserfolg, Verifikationsmisserfolg, Grund für Verifikationsmisserfolg und Vorschläge, wie das Benutzergerät (E1) Verifikation bestehen kann.

8. Multimedia-Broadcast-Groupcast-Verfahren nach Anspruch 1, **dadurch gekennzeichnet, dass**
Schritt 1) umfasst, dass das Benutzergerät (E1) eine Paketdatenprotokoll-Meldeanforderung zu einem Serving GPRS Support Node (E3) sendet, die die Herstellung von Kontakt mit einem Gateway GPRS Support Node (E4) anfordert; der Serving GPRS Support Node (E3) diese Anforderung dann zu dem Gateway GPRS Support Node (E4) sendet; der Gateway GPRS Support Node (E4) dann Informationen als Reaktion auf die Anforderung zu dem Benutzergerät (E1) sendet;
Schritt 2) umfasst, dass das Benutzergerät (E1) die Anforderung zum Zugriff auf den bestimmten Groupcast-Dienst zu dem Gateway GPRS Support Node (E4) sendet und dass der Gateway GPRS Support Node (E4) die Anforderung zum Zugriff auf einen bestimmten Mehrpunkt-Dienst zu dem Broadcast Multicast Service Center (E5) sendet,
Schritt 3) umfasst, dass das Broadcast Multicast Service Center (E5) seine Berechtigtheit für das Multimedia-Broadcast-Groupcast-Verfahren verifiziert und ein Multimedia-Broadcast-Groupcast-Verfahrensbenutzerverifikationsantwortsignal zu dem Gateway GPRS Support Node (E4) sendet, das den Gateway GPRS Support Node (E4) über die Verifikationsergebnisse informiert; und
Schritt 4) umfasst, dass das Broadcast Multicast Service Center (E5) dem Benutzergerät (E1) unter Verwendung des Multimedia-Broadcast-Groupcast-Dienstansageverfahrens die Verifikationsinformationen gibt, die die Verifikationsergebnisse umfassen.

9. Multimedia-Broadcast-Groupcast-Verfahren nach Anspruch 8, **dadurch gekennzeichnet, dass** das Broadcast Multicast Service Center (E5) dem Benutzergerät (E1) die Verifikationsinformationen unter Verwendung von Multimedia-Broadcast-Multicast-Trägerfähigkeitstechnologie gibt.

10. Multimedia-Broadcast-Groupcast-Verfahren nach Anspruch 9, **dadurch gekennzeichnet, dass** das Broadcast Multicast Service Center (E5) Benutzergerät (E1) desselben Typs in Gruppen aufteilt und Benutzer in jeder Gruppe separat benachrichtigt.

11. Multimedia-Broadcast-Groupcast-Verfahren nach Anspruch 8, **dadurch gekennzeichnet, dass** das Broadcast Multicast Service Center (E5) ein Verfahren aus einer Gruppe umfassend Push-Technologie, SMS, SMS Small Area Broadcast und URL verwendet, um dem Benutzergerät (E1) die Verifikationsinformationen zu melden.

12. Multimedia-Broadcast-Groupcast-Verfahren nach einem der Ansprüche 8 bis 11, **dadurch gekennzeichnet, dass** das Broadcast Multicast Service Center (E5) auf der Basis der Anforderungen des Betreibers eine Kombination von mindestens zwei Verfahren verwendet, um das Benutzergerät (E1) zu benachrichtigen.

13. Multimedia-Broadcast-Groupcast-Verfahren nach einem der Ansprüche 8 bis 11, **dadurch gekennzeichnet, dass** die Verifikationsinformationen Folgendes umfassen: Verifikationserfolg, Verifikationsmisserfolg, Grund für Verifikationsmisserfolg und Vorschläge, wie das Benutzergerät (E1) Verifikation bestehen kann.

14. Multimedia-Broadcast-Groupcast-Verfahren nach Anspruch 12, **dadurch gekennzeichnet, dass** die Verifikationsinformationen Folgendes umfassen: Verifikationserfolg, Verifikationsmisserfolg, Grund für Verifikationsmisserfolg und Vorschläge, wie das Benutzergerät (E1) Verifikation bestehen kann.

## Revendications

1. Un type de procédé de diffusion de groupe multidiffusion multimédia utilisé pour mettre en oeuvre des services de multidiffusion pour un équipement d'utilisateur, comprenant les étapes suivantes :
1) un équipement d'utilisateur (E1) établit une connexion logique avec un noeud de réseau;
2) un équipement d'utilisateur (E1) envoie une requête à un centre de service de diffusion multidiffusion (E5) de façon à accéder à un certain service de diffusion de groupe;
3) le centre de service de diffusion multidiffusion (E5) exécute la vérification de recevabilité du procédé de diffusion de groupe multidiffusion multimédia de l'équipement d'utilisateur (E1), **caractérisé par** l'inclusion complémentaire de l'étape suivants :
4) le centre de service de diffusion multidiffusion (E5) fournit des informations de vérification, incluant des résultats de vérification, à l'équipement d'utilisateur (E1), au moyen d'un procédé d'annonce de service de diffusion de groupe multidiffusion multimédia.

2. Le procédé de diffusion de groupe multidiffusion multimédia selon la revendication 1, **caractérisé en ce que** le centre de service de diffusion multidiffusion (E5) utilise une technologie de capacité de porteuse multidiffusion diffusion multimédia pour fournir les informations de vérification à l'équipement d'utilisateur (E1).

3. Le procédé de diffusion de groupe multidiffusion multimédia selon la revendication 2 **caractérisé en ce que** le centre de service de diffusion multidiffusion (E5) sépare les équipements d'utilisateur (E1) du même type en groupes et communique avec les équipements d'utilisateur des différents groupes séparément.

4. Le procédé de diffusion de groupe multidiffusion multimédia selon la revendication 1, **caractérisé en ce que** le centre de service de diffusion multidiffusion (E5) utilise un procédé provenant d'un groupe comprenant la technologie du pousser, SMS, la diffusion à zone restreinte SMS et URL, pour communiquer les informations de vérification à l'équipement d'utilisateur (E1).

5. Le procédé de diffusion de groupe multidiffusion multimédia selon l'une quelconque des revendications 1 à 4, **caractérisé en ce que** le centre de service de diffusion multidiffusion (E5) utilise une combinaison d'au moins deux procédés pour notifier l'équipement d'utilisateur (E1), en fonction des exigences de l'opérateur.

6. Le procédé de diffusion de groupe multidiffusion multimédia selon l'une quelconque des revendications 1 à 4, **caractérisé en ce que** lesdites informations de vérification incluent : succès de la vérification, échec de la vérification, raison de l'échec de la vérification et suggestions relatives à la manière dont l'équipement d'utilisateur (E1) peut passer avec succès la vérification.

7. Le procédé de diffusion de groupe multidiffusion multimédia selon la revendication 5, **caractérisé en ce que** lesdites informations de vérification incluent : succès de la vérification, échec de la vérification, raison de l'échec de la vérification et suggestions relatives à la manière dont l'équipement d'utilisateur (E1) peut passer avec succès la vérification.

8. Le procédé de diffusion de groupe multidiffusion multimédia selon la revendication 1, **caractérisé en ce que** :
l'étape 1) consiste **en ce que** l'équipement d'utilisateur (E1) envoie une requête de rapport de protocole de données par paquets à un noeud de support GPRS de desserte (E3) demandant l'établissement d'un contact avec le noeud de support GPRS de passerelle (E4) ; le noeud de support GPRS de desserte (E3) envoie ensuite cette requête au noeud de support GPRS de passerelle (E4) ; le noeud de support GPRS de passerelle (E4) envoie ensuite des informations répondant à la requête à l'équipement d'utilisateur (E1);
l'étape 2) consiste **en ce que** l'équipement d'utilisateur (E1) envoie la requête d'accès au certain service de diffusion de groupe au noeud de support GPRS de passerelle (E4) et **en ce que** le noeud de support GPRS de passerelle (E4) transmet la requête d'accès à un certain service multipoint au centre de service de diffusion multidiffusion (E5) et
l'étape 3) consiste **en ce que** le centre de service de diffusion multidiffusion (E5) vérifie son éligibilité pour le procédé de diffusion de groupe multidiffusion multimédia et envoie un signal de réponse de vérification de l'utilisateur du procédé de diffusion de groupe multidiffusion multimédia au noeud de support GPRS de passerelle (E4), afin d'informer le noeud de support GPRS de passerelle (E4) des résultats de la vérification;
l'étape 4) consiste **en ce que** le centre de service de diffusion multidiffusion (E5) fournit à l'équipement d'utilisateur (E1) les informations de vérification, y compris les résultats de la vérification, au moyen d'un procédé d'annonce de service de diffusion de groupe multidiffusion multimédia.

9. Le procédé de diffusion de groupe multidiffusion multimédia selon la revendication 8, **caractérisé en ce que** le centre de service de diffusion multidiffusion (E5) fournit les informations de vérification à l'équipement d'utilisateur (E1) au moyen d'une technologie de capacité de porteuse multidiffusion diffusion multimédia.

10. Le procédé de diffusion de groupe multidiffusion multimédia selon la revendication 9, **caractérisé en ce que** le centre de service de diffusion multidiffusion (E5) divise les équipements d'utilisateur (E1) du même type en groupes et notifie les utilisateurs de chaque groupe séparément.

11. Le procédé de diffusion de groupe multidiffusion multimédia selon la revendication 8, **caractérisé en ce que** le centre de service de diffusion multidiffusion (E5) utilise un procédé provenant d'un groupe comprenant la technologie du pousser, SMS, la diffusion à zone restreinte SMS et URL, pour fournir les informations de vérification à l'équipement d'utilisateur (E1).

12. Le procédé de diffusion de groupe multidiffusion multimédia selon l'une quelconque des revendications 8 à 11, **caractérisé en ce que** le centre de service de diffusion multidiffusion (E5) utilise une combinaison d'au moins deux procédés pour notifier l'équipement d'utilisateur (E1), en fonction des exigences de l'opérateur.

13. Le procédé de diffusion de groupe multidiffusion multimédia selon l'une quelconque des revendications 8 à 11 **caractérisé en ce que** lesdites informations de vérification incluent : succès de la vérification, échec de la vérification, raison de l'échec de la vérification et suggestions relatives à la manière dont l'équipement d'utilisateur (E1) peut passer avec succès la vérification.

14. Le procédé de diffusion de groupe multidiffusion multimédia selon la revendication 12 **caractérisé en ce que** lesdites informations de vérification incluent : succès de la vérification, échec de la vérification, raison de l'échec de la vérification et suggestions relatives à la manière dont l'équipement d'utilisateur (E1) peut passer avec succès la vérification.
